# EUROPÄISCHE PATENTANMELDUNG

(11) **EP 0 840 077 A2**
(43) Veröffentlichungstag der Anmeldung: **06.05.1998**
(21) Anmeldenummer: 97116118.7
(22) Anmeldetag: 17.09.1997
(51) Int. Cl.: F25B 17/08

(54) **Adsorptionskältemaschine und Verfahren zu deren Betrieb**

(30) Priorität: 29.10.1996 DE 19644938
(71) Anmelder: Lutz, Johannes, 69469 Weinheim (DE)
(72) Erfinder: Lutz, Johannes, Dipl.-Ing., 69469 Weinheim (DE); Habermehl, Burkhard, Dipl.-Ing. (FH), 01326 Dresden (DE); Wernecke, Henri, Dipl.-Ing., 01097 Dresden (DE)
(74) Vertreter: Petersen, Frank, Dipl.-Ing.

(57) **Zusammenfassung**

Adsorptionskältemaschine mit zwei Kammern (1,1'), in denen abwechselnd ein Kältemittel verdampft und adsorbiert oder aber desorbiert und kondensiert wird. Um bei einer derartigen Vorrichtung den Wirkungsgrad zu erhöhen, wird vorgeschlagen, die erwähnten Kammern (1,1') beim Umstellen vom einen auf den entgegengesetzten Zyklus zum Ausgleich des in ihnen herrschenden Kältemitteldampfdruckes miteinander zu verbinden.

## Beschreibung

Die Erfindung betrifft eine Adsorptionskältemaschine, die wenigstens einen Kühlmittelverdampfer zum Verdampfen eines Kühlmittels aufweist, sowie mindestens zwei Kammern, in denen ein Adsorptionsmittel verdampftes Kühlmittel adsorbiert bzw. bei Beheizung desorbiert, sowie wenigstens einen Kondensator, an dem sich desorbiertes dampfförmiges Kühlmittel niederschlägt, und ein Verfahren zu deren Betrieb, bei dem in einem ersten Arbeitszyklus in der einen Kammer Kühlmittel adsorbiert wird, während in der anderen Kammer Kühlmittel desorbiert wird und in einem sich anschließenden Zyklus die beiden Kammern gegengleich betrieben werden.

Eine entsprechende Adsorptionskältemaschine ist bekannt aus der DE-OS 38 08 653. In dieser herrscht nahezu Vakuum und es wird in einem Raum mittels eines Verdampfers ein Kältemittel verdampft, nämlich Wasser, wodurch einem mit dem Verdampfer verbundenen Kaltwasserkreislauf Wärme entzogen wird. Das verdampfte Kühlmittel wird dann durch ein Klappenventil in eine Kammer geleitet, in der es von einem Adsorptionsmittel nämlich Silicagel adsorbiert wird, das an einer röhrenartigen Adsorptionssäule angeordnet ist. Um die beim Adsorbieren entstehende Wärme aufzunehmen, wird das Adsorptionsmittel dabei gekühlt, indem durch die Adsorptionssäule Kühlwasser geleitet wird.

Wenn das Adsorptionsmittel gesättigt ist, wird die Verbindung zum Verdampfer unterbrochen, indem das Klappventil schließt und die Kammer wird über ein weiteres Klappenventil mit einem einen Kondensator enthaltenden Raum verbunden. Durch Heißwasser, das dann durch die Adsorbtionssäule geleitet wird, wird dann das Adsorptionsmittel beheizt, woraufhin das adsorbierte Kühlmittel desorbiert wird und im entsprechenden Raum an dem durch Kühlwasser gekühlten Kondensator niedergeschlagen. Das derart kondensierte Kühlmittel wird wieder dem Verdampfer zugeführt, so daß ein geschlossener Kreislauf für das Kühlmittel vorliegt.

Indem bei diesen vorbekannten Maschinen dabei zwei Kammern vorgesehen sind, in denen Adsorptionssäulen vorhanden sind, die wechselweise mit den Verdampfer bzw. Kondensator enthaltenden Räumen verbunden sind, wobei abwechselnd adsorbiert bzw. desorbiert wird, wird ein quasi-kontinuierliches Verfahren gewährleistet.

Zur Minderung von Energieverlusten werden beim Betrieb dieser Anlage beim Umschalten zwischen den beiden Adsorptionssäulen diese hydraulisch so miteinander verbunden, daß die Heißwassersäule in dem einen Wärmetauscher in den anderen fließt, um so zu dessen Vorerwärmung beizutragen.

Außerdem ist eine Adsorptionskältemaschine aus der DE 36 33 465 bekannt, bei der in nur einem evakuierten Raum ein Adsorptionswärmetauscher, ein Verdampfer-/Kondensator-Wärmetauscher und ein Behälter zur Speicherung von überschüssigem Kältemittel angeordnet sind. Diese Maschine hat außerdem einen ausreichend dimensionierten Kaltwasserspeicher, da sie diskontinuierlich arbeitet und deshalb gepuffert sein muß.

Mit den Adsorptionskältemaschinen wie beschrieben wird dabei über den dem Verdampfer zugeordneten Kaltwasserkreislauf kaltes Wasser geliefert, das beispielsweise zur Kühlung in einer Klimaanlage verwandt werden kann, während der für die Desorption benötigte Heißwasserkreislauf beispielsweise durch Fernwärme zu erhitzen ist. So kann eine solche Anlage z. B. in der heißen Jahreszeit eingesetzt werden, um Wärme aus der Kraft-Wärme-Kopplung zu verwerten, die nicht für Heizzwecke in Gebäuden benötigt wird.

Aber auch aufgrund des gestiegenen Umweltbewußtseins und der damit verbunden Forderung nach rationeller Energieanwendung durch Nutzung von Solar- oder Restwärme und dem Einsatz umweltschonender Materialien hat die Adsorptionstechnologie sehr gute Marktchancen auf dem Gebiet der Erzeugung von Kaltwasser zur Klimatisierung und Prozeßkühlung.

Beide oben diskutierten Anlagen haben aber wesentliche Nachteile, aufgrund derer sie den heutigen technologischen und konstruktiven Anforderungen des Marktes nicht mehr gerecht werden. Dabei sind sie z. B. aufgrund ihrer mehreren Kammern recht schwer und zwischen den Kammern und Räumen treten Überströmverluste auf. Oder der für die Pufferung der diskontinuierlich arbeitenden Anlage notwendige Kaltwasserspeicher ist sehr platzraubend.

Damit derartige Anlagen, die relativ teuer sind, auch im Vergleich zu den bisherigen Kompressorkälteanlagen in preislicher Hinsicht wettbewerbsfähig sind, besteht die Aufgabe, solche Anlagen mit möglichst hohem Wirkungsgrad zu betreiben.

Für eine breite Anwendung sind insbesondere kompakte Maschinen in unterschiedlichen Baureihen, ohne umfangreiche technische Peripherie aber mit einer leistungsfähigen, den heutigen Standards entsprechenden Steuerelektronik erforderlich.

Die dabei wesentliche Aufgabe, den Wirkungsgrad der Maschine zu erhöhen, wird erfindungsgemäß dadurch gelöst, daß die oben erwähnten Kammern zwischen den Zyklen miteinander zum Ausgleich des in ihnen herrschenden Kühlmitteldampfdruckes verbunden werden.

Der Erfindung liegt dabei die Erkenntnis zugrunde, daß sowohl der Adsorptionsvorgang als auch der Desorptionsvorgang Sättigungscharakteristika aufweisen, das heißt mit fortschreitender Prozeßdauer immer geringere Adsorptions- bzw. Desorptionsleistungen erfolgen. Die Desorption und die Adsorption gehen dabei einher mit entsprechendem Dampfdruck des Kältemittels, wobei dieser bei der Adsorption des verdampften Kältemittels niedriger ist und bei der anschließenden Desorption höher. Dabei verläuft gleichermaßen die Adsorption bei niedriger Temperatur bzw. die Desorption bei höherer Temperatur.

Bei zwei aufeinanderfolgenden Zyklen, bei denen in zwei parallel geschalteten Kammern in der ersten Kammer während des ersten Zyklus adsorbiert und während des zweiten Zyklus desorbiert wird bzw. in der zweiten Kammer während des ersten Zyklus desorbiert und während des zweiten Zyklus adsorbiert wird, herrscht am Ende des ersten Zyklus demgemäß in der ersten Kammer ein niedriger Dampfdruck bei niedriger Temperatur und in der zweiten Kammer ein hoher Dampfdruck bei hoher Temperatur.

Um jetzt beim Umschalten in den zweiten Zyklus schnell mit der Desorption bzw. Adsorption beginnen zu können, müssen Dampfdruck und Temperatur in der ersten Kammer erst wieder auf ein relativ hohes Niveau angehoben werden, bei dem die Desorption abläuft, während in der zweiten Kammer Dampfdruck und Temperatur gleichermaßen erst wieder auf ein relativ niedriges Niveau abgesenkt werden müssen, bei dem die Adsorption abläuft. Um die Zeiträume zum Anpassen an die anderen Prozeßbedingungen zu minimieren, werden die beiden Kammern zwischen den beiden Zyklen miteinander verbunden, so daß sich Dampfdruck und Temperatur in beiden Kammern auf ein gleiches Niveau nivellieren, von wo aus nach wieder erfolgter Trennung der beiden Kammern die genannten Prozeßbedingungen zur Durchführung der Desorption bzw. Adsorption schneller zu erreichen sind.

Dabei bietet es sich an, den Übergang vom ersten Zyklus zum zweiten Zyklus in Abhängigkeit des Dampfdruckes und der Temperatur des Kühlmittels zu steuern und nicht wie bisher über die Zeit.

Um eine direkte Leistungssteuerung der Maschine zu gewährleisten, muß sie immer an veränderte, interne und externe Prozeßbedingungen angepaßt werden. Dazu müßte eigentlich eine große Anzahl von prozeßrelevanten Kennwerten wie Temperaturen, Temperaturspreizungen über die Wärmetauscher, Kältemittelumsatz etc. erfaßt werden, was in der Praxis wegen des hohen Aufwandes aber nicht sinnvoll ist.

Die Erfinder sind aber zu der Erkenntnis gelangt, daß eine diese Werte vereinigende Größe der Kältemitteldampfdruck in der jeweiligen Kammer ist. Sein Verlauf in der Kammer und die Temperaturen der hydraulischen Kreise der Maschine können den Leistungsprozeß hinreichend charakterisieren. Dabei weist dieser Druckverlauf Sättigungscharakteristika auf, die mit den Leistungskennwerten korrelieren.

Da also Dampfdruck und Temperatur in Abhängigkeit von den abgegebenen Leistungen unterschiedlich schnell ansteigen bzw. abfallen, kann über sie wirkungsvoll eine Leistungssteuerung der Adsorptionskältemaschine erreicht werden.

Bei dieser Leistungssteuerung werden vorteilhafterweise die genannten Werte erfasst und dann in einer Auswerteeinheit mit Kennwerten verglichen, die anlagenspezifisch ermittelt wurden und einen bestimmten Betriebspunkt kennzeichnen. Hierdurch wird eine an den effektiven Bedarf angepaßte Steuerung verwirklicht.

Die an den o. g. Druckausgleich anschließende Anpassungsphase an den im entsprechenden Zyklus gewünschten Prozeßdruck ist besonders gut zu gestalten, wenn zwischen Adsorptionsmittel und dem Umgebungsmedium eine besonders große Oberfläche vorhanden ist. Diese kann vorteilhaft erreichet werden, indem die Adsorptionssäulen als Plattenwärmetauscher ausgebildet sind und das Adsorptionsmittel als im wesentlichen ebene Adsorptionsschicht auf diesen aufgebracht ist.

Hierdurch wird einerseits eine gleichmäßige Kältemitteldampfanströmung zum Adsorptionsmittel gewährleistet und andererseits von diesem eine gute Wärmeübertragung auf den Wärmetauscher während der Adsorptionsphase, in der das Adsorptionsmittel durch den Wärmetauscher gekühlt wird. Dies funktioniert aber auch anders herum, indem bei der Desorption die vom Plattenwärmetauscher an das Adsorptionsmittel abgegebene Austreibenergie vom Adsorptionsmittel schneller und gleichmäßiger aufgenommen wird. Über die Dicke dieser Adsorptionsschicht kann dabei die Leistungscharakteristik für die Adsorption bzw. Desorption entsprechend eingestellt werden.

Die qualitative Adsorptionscharakteristik kann dabei in Abhängigkeit zunehmender Schichtdicke des Adsorptionsmittels mit folgenden Kriterien beschrieben werden: Die maximal adsorbierbare Kältemittelmenge nimmt proportional zur gesamten Adsorptionsmittelmenge zu. Die effektive Adsorptionsleistung nimmt dabei aber ab, da sich aufgrund dickerer Adsorptionsmittelschichten die je Zeiteinheit adsorbierbaren Kältemittelmengen verringern, weswegen die Zyklenzeit erhöht werden muß. Somit ist also eine geringere Schicktdicke zur Dampfanströmung und Wärmeübertragung besser geeignet. Bei hohen Leistungen und den bei geringer Schichtdicke notwendigen kurzen Zyklenzeiten ist hierbei allerdings der Einfluß der Verlustleistungen bei den Umschaltprozessen relativ hoch. Die optimale Schichtdicke ist somit von der konstruktiven Ausführung der Maschine und den Temperaturen bestimmt, bei denen diese betrieben wird. Dies sind mit die wesentlichen Faktoren, die für die Systemträgheit entscheidend sind.

Um den Wirkungsgrad der Anlage weiter zu verbessern, wird weiterhin vorgeschlagen, die Kammern, die die Adsorptionssäulen enthalten, direkt mit Plattenwärmetauschern zu versehen, die abwechselnd als Kühlmittelverdampfer oder als Kondensator fungieren. Dadurch können die Strömungsverluste vermieden werden, die durch die Ventile bewirkt werden, die bei den bisher bekannten Adsorptionskältemaschinen zwischen dem Verdampfer und der das Adsorptionsmittel enthaltenden Kammer bzw. zwischen der Kammer und dem Kondensator vorhanden sind.

Die Maschine besteht somit vorzugsweise aus identischen Modulen jeweils gleicher Leistungsklasse, wobei mindestens zwei Module miteinander verschaltet werden. Diese Modulpaare ermöglichen einen quasi-kontinuierlichen Betrieb, indem die Module gegengleich betrieben werden, das heißt, während im ersten Modul die Prozeßpaarung "Verdampfung des Kältemittels" und "Adsorption des Kältemitteldampfes" abläuft, wird im zweiten Modul gleichzeitig Kältemittel durch Desorption und Kondensation wiedergewonnen.

Bei den hierbei sowohl als Verdampfer als auch als Kondensator fungierenden Wärmetauschern wird dabei vorzugsweise die entsprechende Umschaltung von Verdampferauf Kondensatorbetrieb bzw. umgekehrt an den entsprechenden Ein- bzw. Austritten, d.h. dem Vorlauf bzw. Rücklauf zeitverzögert vorgenommen. Der Betrag der Zeitverzögerung ist dabei abhängig von der Durchströmgeschwindigkeit der Wärmetauscher. Dadurch wird eine aufgrund dieser speziellen Bauweise mögliche Vermischung von Kaltwasser und Kühlwasser in der Umschaltphase minimiert.

Für die Bauart der entsprechenden Wärmetauscher hat es sich als besonders günstig erwiesen, diese Plattenwärmetauscher senkrecht anzuordnen, da sie dann mit einem wirkungsvollen Kältemittelzuführsystem zu verbinden sind, über das sie mit einem Dünnfilm aus Kältemittel beaufschlagt werden können. Durch diesen Dünnfilm wird in der Verdampfungsphase eine gleichmäßige Verdampfung erreicht und in der Kondensationsphase die kontinuierliche Abfuhr des kondensierenden Kühlmittels.

Eine weitere Verbesserung der Arbeitsprozesse kann erreicht werden, wenn einzelne Platten des Adsorber-Wärmetauschers in Zwischenräumen des ebenfalls aus mehreren Platten bestehenden Verdampfer-/Kondensator-Wärmetauschers angeordnet sind. Dadurch wird beispielsweise bei der Verdampfung der Kältemitteldampfdruck in unmittelbarer Umgebung der Verdampferoberfläche durch direkte Adsorption des Kältemitteldampfes gering gehalten und so eine hohe Verdampfungsleistung realisiert.

Weitere Merkmale und Vorteile der Erfindung ergeben sich aus der nachfolgenden Beschreibung von Ausführungsbeispielen. Dabei zeigt
- Figur 1: die Prinzipskizze einer erfindungsgemäßen Adsorptionskältemaschine mit getrennt angeordneten Wärmetauschersystemen;
- Figur 2: die Prinzipskizze einer erfindungsgemäßen Adsorptionskältemaschine mit einem Verbund der beiden Wärmetauschersysteme.

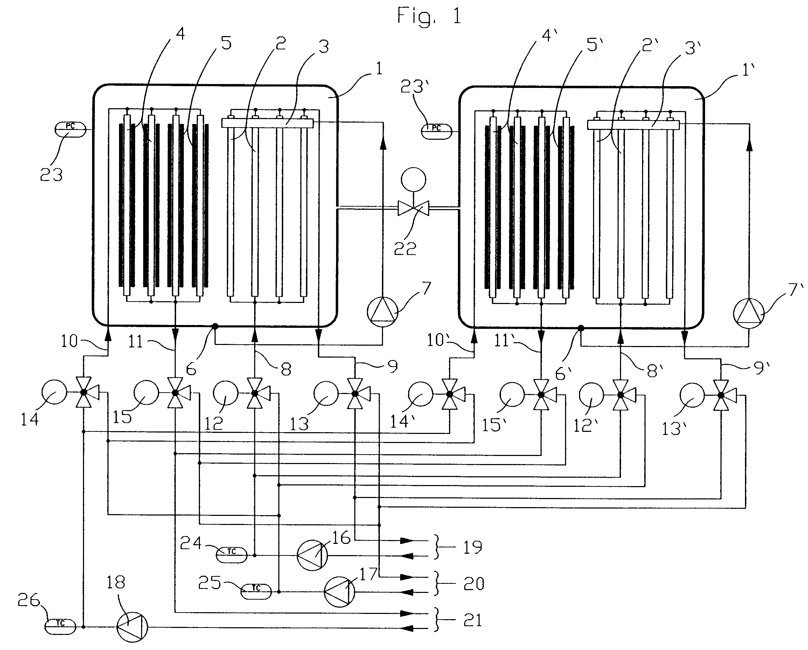

In Figur 1 ist die Prinzipskizze einer erfindungsgemäßen Adsorptionskältemaschine dargestellt. Diese besteht aus zwei identischen Kammern 1, 1', die vakuumdicht ausgebildet sind. Jede der beiden Kammern 1, 1' verfügt über die gleichen internen und externen Einrichtungen. Für den Betrieb der Maschine wird in den beiden Kammern ein Vakuum im Bereich von 10 mbar eingestellt.

In der Kammer 1 befindet sich ein aus mehrere, senkrecht angeordneten Platten bestehender Plattenwärmetauscher 2, dem über ein Kältemittelverteilsystem 3 ein Kältemittel zugeführt wird, das in der Form eines Dünnfilms nach unten läuft und dabei in einem Verdampfungsprozeß verdampft. Dabei wird durch den Plattenwärmetauscher Kaltwasser aus einem externen Kaltwasserkreis 19 über Leitungen 8, 9 geführt, und damit durch Entzug von Verdampfungswärme gekühlt. Über eine Kaltwasserpumpe 16 wird das Kaltwasser dabei umgewälzt.

Das am Plattenwärmetauscher 3 verdampfte Kältemittel wird aus einem Kältemittelsammler 6 mittels einer vakuumdichten Kältemittelpumpe 7 dem Verteilsystem 3 zugeführt. Der beim Verdampfungsprozeß entstehende Kältemitteldampf wird vom Adsorptionsmittel 5 adsorbiert, um die Annäherung des Dampfdruckes an den Sättigungsdruck des Kältemittels zu vermeiden und damit den Dampfdruck des Kältemittels in der Kammer 1 für einen längeren Zeitraum gering zu halten.

Das Adsorptionsmittel 5 ist dabei als ebene Adsorptionsschicht auf einem weiteren Plattenwärmetauscher 4 aufgebracht.

Bei der Adsorption des Kältemitteldampfes entsteht Wärme, die über den Plattenwärmetauscher 4 abgeführt wird, der hierzu über Leitungen 10, 11 mit einem externen Kühlwasserkreislauf 20 verbunden ist. Dazu wird das Kühlwasser mit einer Kühlwasserpumpe 17 umgewälzt.

Nach einer bestimmten Betriebszeit ist das Adsorptionsmittel 5 gesättigt und kann keinen Kältemitteldampf mehr adsorbieren. Damit steigt bei fortdauernder Verdampfung des Kältemittels der Dampfdruck in der Kammer 1 entsprechend bis zum Sättigungsniveau an und der Verdampfungsprozeß kommt zum Erliegen. Um die Maschine auf einem technisch sinnvollen Leistungsniveau betreiben zu können, wird dieser Prozeß vor dem Erreichen der Sättigungszustände abgebrochen und die Elemente werden in den nachfogenden Betriebsstatus umgeschaltet.

Zur Ermittlung des Optimierungspunktes für den Prozeßabbruch bezüglich des besten Gesamtwirkungsgrades der Maschine sind neben der jeweiligen konstruktiven Ausführung eine Reihe von Betriebsparametern bedeutsam. Dazu gehören das Niveau des Vakuums in der Kammer, die Vorlauf- und Rücklauftemperaturen an den Verdampferund Adsorberwärmetauschern sowie deren zeitliche Schwankungen. Da diese Faktoren und damit die effektive Maschinenleistung mit dem in der Kammer herrschenden Kältemitteldampfdruck korrelieren, werden über einen Absolutdrucksensor 23 der Absolutdruck und dessen zeitliche Charakteristik, die Kalt- und Kühlwassertemperaturen mit Temperatursensoren 24, 25 ermittelt und in einer Maschinensteuerung ausgewertet und zu Betriebssignalen der externen Regelelemente umgewandelt.

Zu diesen Regelelementen zählen den Wärmetauschern 2, 4 vorgeschaltete 3/2-Wegeventile 12, 13, 14, 15, die zwischen je zwei hydraulischen Kreisen umschalten, die Pumpen 16, 17, 18 der hydraulischen Kreise, die Kältemittelpumpe 7 und ein Druckausgleichsventil 22.

Während in der Kammer 1 der beschriebene Verdampfungs- und Adsorptionsprozeß abläuft, wird gleichzeitiger in der Kammer 1' ein gegenläufiger Desorptions- und Kondensationsprozeß betrieben. Das dort auf einen Wärmetauscher 4' aufgebrachte Adsorptionsmittel 5' wird dabei erwärmt, indem dem Wärmetauscher 4' über Leitungen 10', 11' aus einem Heißwasserkreislauf 21 mit einer Pumpe 28 Heißwasser zugeführt wird. Dadurch wird das vorher adsorbierte Kältemittel aus dem Adsorptionsmittel 5' desorbiert (ausgetrieben). Zur Absenkung des mit der Desorption ansteigenden Kältemitteldampfdruckes wird der desorbierte Kältemitteldampf an einem als Kondensator wirkenden Wärmetauscher 2' kondensiert.

Dieser wird hierzu über Leitungen 8', 9' mit dem Kühlwasserkreis 20 verbunden und mittels der Pumpe 17 mit Kühlwasser durchströmt. Das kondensierte Kältemittel läuft an den senkrechten Wärmetauscherplatten herab, und tropft in den Kältemittelsammler 6' ab.

Analog dem Verdampfungs- und Adsorptionsprozeß weisen auch die Desorption und die Kondensation Sättigungscharakteristika auf. Um auch hier den Prozeßverlauf zu erfassen, werden der Dampfdruck in der Kammer mit einem Sensor 23' und die Vorlauftemperaturen des Heiz- und des Kühlkreises mit Temperatursensoren 25, 26 ermittelt und der Maschinensteuerung zugeführt.

Der Betrieb des Desorptions- und Kondensationsprozesses bis zum Erreichen des Sättigungszustandes ist hinsichtlich der Gesamtleistung der Maschinen nicht sinnvoll, so daß dieser nach dem Ablauf der Phase mit der höchsten Effektivleistung abgebrochen wird.

Die beiden Kammern 1, 1' mit den darin ablaufenden Prozeßpaaren Verdampfung/Adsorption und Desorption/Kondensation werden immer gegengleich betrieben, wodurch es zu einer permanenten Regenerierung des Desorptionsmittels und der Zurückgewinnung des Kältemittels kommt. Damit wird ein quasikontinuierlicher Verdampfungsprozeß realisiert.

Der Zeitpunkt der Umschaltung zwischen den beiden Prozeßpaaren entspricht dabei der Beendigung der optimalen Arbeitsphasen von Verdampfung/Adsorption und Desorption/Kondensation. Diese variieren mit den jeweiligen Betriebsbedingungen und bestimmen damit unterschiedliche Umschaltzeiten. Mit ständigen Messungen von Druck und Temperatur in den Kammern erfolgt eine permanente Anpassung an veränderte Prozeßbedingungen.

Wesentlich ist jetzt, daß bei der Umschaltung die beiden Modulkammern 1, 1' durch das Öffnen des Ventils 22 miteinander verbunden werden. Dabei gleichen sich die unterschiedlichen Kammerdrücke aus, und es stellt sich ein mittlerer Dampfdruck ein. Damit wird der jeweilige Kammerdruck dem bevorstehenden Arbeitsdruck angenähert.

Mit dem Ende des ersten Zyklusses und dem Druckausgleich werden auch die hydraulischen Kreise der Wärmetauscher umgeschaltet. Dabei werden die Ventile 14, 15 der Leitungen 10, 11 des Adsorberwärmetauschers 4 und die Ventile 14', 15' der Leitungen 10', 11' des Adsorberwärmetauschers 4' vom Kühlkreis 20 auf den Heizkreis 21 und umgekehrt umgeschaltet. Zeitgleich schalten die Ventile 12, 13 der Leitungen 8, 9 den Verdampferwärmetauscher 2 vom Kaltwasserkreis 19 auf den Kühlwasserkreis 20 um, d. h. von Verdampfer- auf Kondensatorbetrieb. Der Kondensatorwärmetauscher 2' wird entsprechend entgegengesetzt umgeschaltet.

Zur Vermeidung von Leistungsverlusten und der Verbesserung des Gesamtwirkungsgrades werden die Ventile der Vorlaufleitungen 10, 10', 8, 8' der Wärmetauscher zeitversetzt zu den Ventilen der Rücklaufleitungen 11, 11', 9, 9' geschaltet. Damit wird die Vermischung der hydraulischen Kreise 19, 20, 21 weitestgehend vermieden.

Die zeitliche Verzögerung richtet sich dabei nach der Durchflußgeschwindigkeit durch die jeweiligen Wärmetauscher.

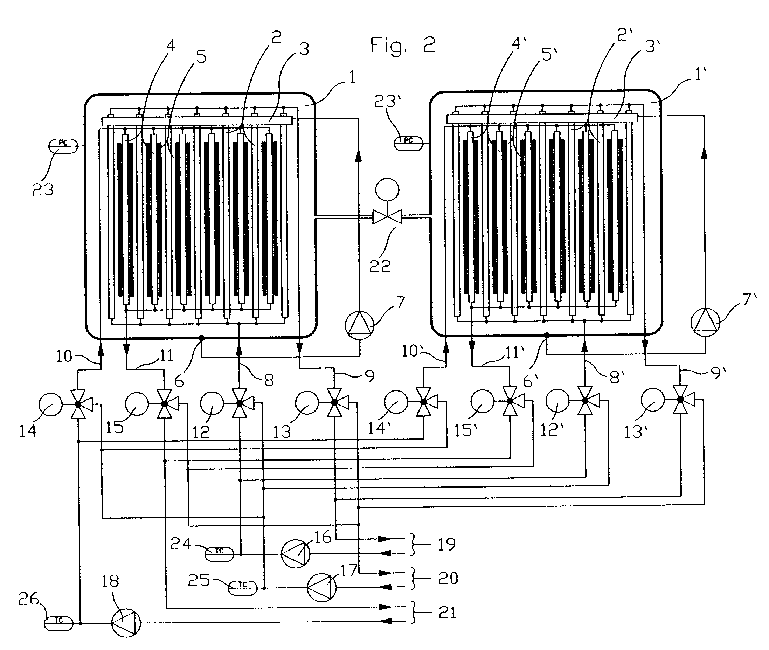

Beim Einsatz besonders leistungsfähiger Module der erläuterten Kältemaschine werden die beiden Wärmetauscher in jeder Kammer gemäß Figur 2 angeordnet. Dabei werden die einzelnen Wärmetauscherplatten in den Zwischenräumen des jeweils anderen Wärmetauschers angeordnet, so daß der Kältemitteldampf direkt und ohne Strömungsverluste verdampft und vom Adsorptionsmittel aufgenommen bzw. desorbiert und wieder zurückkondensiert werden kann.

Für den Betrieb der beschriebenen Adsorptionskältemaschine kommen als Adsorptionsmittel vorzugsweise Silicagel und als Kältemittel vorzugsweise Wasser zum Einsatz.

In der Ausführung verschiedener Leistungsklasse der Maschinenmodule bietet diese Vorrichtung eine unter Umweltgesichtspunkten günstige Möglichkeit, Kälte zu liefern, ohne hierzu umweltschädigendes Kältemittel verwenden zu müssen. Außerdem ist sie für den Betrieb mit Solarwärme und Niedertemperaturabwärme aus der Kraft-Wärme-Kopplung oder aus industriellen Prozessen ab 60 °C als Antriebsenergie hervorragend geeignet.

## Patentansprüche

1. Adsorptionskältemaschine mit wengistens einem Kältemittelverdampfer (2, 2') zum Verdampfen eines Kältemittels, sowie mindestens zwei Kammern (l, l'), in denen ein Adsorptionsmittel (5, 5') verdampftes Kältemittel adsorbiert, bzw. bei Beheizung desorbiert, sowie wenigstens einem Kondensator (2; 2'), an dem sich desorbiertes dampfförmiges Kältemittel niederschlägt,
dadurch gekennzeichnet,
daß die beiden Kammern (l, l') zum Ausgleich von in ihnen herschendem Dampfdruck des Kältemittels miteinander verbindbar sind.

2. Adsorptionskältemaschine insbesondere gemäß Anspruch l,
dadurch gekennzeichnet,
daß das Adsorptionsmittel als ebene Adsorptionsschicht (5, 5') auf einem ersten Plattenwärmetauscher (4, 4') aufgebracht ist.

3. Adsorptionskältemaschine gemäß einem oder mehreren der vorstehenden Ansprüche,
dadurch gekennzeichnet,
daß sie sich aus mindestens zwei nur eine Kammer (l, l') aufweisende Modulen zusammengesetzt, wobei jede Kammer (1, 1') mit einem zweiten Plattenwärmetauscher (2, 2') versehen ist, der abwechselnd als Kältemittelverdampfer und als Kondensator fungiert.

4. Adsorptionskältemaschine gemäß Anspruch 3,
dadurch gekennzeichnet,
daß der weitere Plattenwärmetauscher (2, 2') senkrecht angeordnet ist und mit einem Kältemittelzuführsystem (3, 3') zur Dünnfilmbeaufschlagung versehen ist.

5. Adsorptionskältemaschine gemäß Anspruch 2 und 3
dadurch gekennzeichnet,
daß sie für die Adsorption und/oder die Verdampfung/Kondensation mehrere Plattenwärmetauscher (2, 4; 2' 4') aufweist, die abwechselnd zwischeneinander angeordnet sind.

6. Adsorptionskältemaschine gemäß einem oder mehreren der vorherigen Ansprüche;
dadurch gekennzeichnet,
daß sie mit Temperatur- und Druckfühlern (23, 23') versehen ist, deren Meßwerte in einer Maschinensteuerung mit einem Kennfeld zur Steuerung auswertbar sind.

7. Verfahren zum Betrieb einer Adsorptionskältemaschine gemäß Anspruch 1, wobei in einem ersten Arbeitszyklus in der einen Kammer Kältemittel bei einem niedrigeren Dampfdruck adsorbiert wird, während in der anderen Kammer Kältemittel bei einem höheren Dampfdruck desorbiert wird und in einem sich anschließenden Zyklus die beiden Kammern gegengleich betrieben werden, dadurch gekennzeichnet, daß die beiden Kammern (1, 1') zwischen den beiden Zyklen zum Ausgleich des Dampfdruckes miteinander verbunden werden.

8. Verfahren gemäß Anspruch 7,
dadurch gekennzeichnet,
daß der Übergang vom ersten zum zweiten Zyklus in Abhängigkeit des Dampfdruckes des Kältemittels gesteuert wird.

9. Verfahren gemäß Anspruch 7 zum Betrieb einer Adsorptionskältemaschine gemäß Anspruch 3,
dadurch gekennzeichnet,
daß die Umschaltung von Verdampfer- auf Kondensatorbetrieb des Plattenwärmetauschers (2, 2') bzw. umgekehrt zeitverzögert erfolgt an dessen Vorlauf (8, 8') und dessen Rücklauf (9, 9').
